# EUROPÄISCHE PATENTSCHRIFT

(11) **EP 1 586 861 B1**
(45) Veröffentlichungstag und Bekanntmachung des Hinweises auf die Patenterteilung: **20.02.2008**
(21) Anmeldenummer: 04101533.0
(22) Anmeldetag: 15.04.2004
(51) Int. Cl.: G01C 21/36, G08G 1/0969

(54) **Verfahren und Vorrichtung zur Darstellung von Fahrerinformationen unter Berücksichtigung anderer beweglicher Objekte**
Method and apparatus for displaying information for the driver taking into account other movable objects
Procédé et appareil pour afficher des informations pour le conducteur tenant compte d'autres objets mobiles

(43) Veröffentlichungstag der Anmeldung: 19.10.2005
(73) Patentinhaber: ROBERT BOSCH GMBH, 70442 Stuttgart (DE)
(72) Erfinder: Brenner, Claus, 30655, Hannover (DE); Faenger, Jens, 06406, Bernburg (DE)

(56) Entgegenhaltungen:
- EP-A- 0 406 946
- EP-A- 0 802 516
- EP-A- 1 383 099
- WO-A-02/10838
- DE-A- 10 023 160
- DE-A- 10 138 719
- DE-A- 19 813 300
- DE-U- 29 913 292
- US-B1- 6 285 317
- PATENT ABSTRACTS OF JAPAN Bd. 1999, Nr. 01, 29. Januar 1999 (1999-01-29) & JP 10 267680 A (FUJITSU TEN LTD), 9. Oktober 1998 (1998-10-09)

## Beschreibung

Die Erfindung betrifft ein Verfahren und eine Vorrichtung zur Darstellung von Fahrerinformationen, insbesondere für ein Fahrzeug-Navigationssystem.

Fahrzeug-Navigationssysteme ermitteln aus vom Fahrer eingegebenen Zieldaten, Positionsdaten und Kartendaten Zielführungsanweisungen, die den Fahrer entlang einer sicheren, schnellen und direkten Fahrtroute zu dem Ziel führen. Die Zielführungsanweisungen, insbesondere durchzuführende Manöver, werden vom Navigationssystem akustisch oder optisch durch Ausgabe von Pfeilen auf einer Anzeigeeinrichtung im Dashboardbereich des Fahrzeugs ausgegeben. Weiterhin können zum Teil durch Abstandssensoren Geschwindigkeiten des eigenen Fahrzeugs und anderer Verkehrsteilnehmer ermittelt und hierdurch Gefahrensituationen erkannt werden.

Bei der optischen Ausgabe von Zielführungsanweisungen mit der Darstellung auf einem Anzeigefeld einer Anzeigeeinrichtung werden im Allgemeinen generalisierte, insbesondere abstrahierte bzw. vereinfachte Fahrsituationsdarstellungen, z. B. Kreuzungsdarstellungen ausgegeben, in denen die durchzuführenden Fahrmanöver, z. B. ein Abbiegevorgang, hervorgehoben sind.

Durch die generalisierte Darstellung der Fahrsituation und die grafisch hervorgehobenen Zielführungsanweisungen wird die Ablenkung des Fahrers vom Verkehrsgeschehen zwar gering gehalten und der technische Aufwand der aktuellen Kartenermittlung und Ermittlung der anzuzeigenden Zielführungssignale begrenzt. Dennoch wird die Aufmerksamkeit des Fahrers durch den erforderlichen zeitweisen Blick auf die Anzeigeeinrichtung, in der er sich jedes Mal zunächst neu zurechtfinden und die angezeigten Informationen auf seine Fahrumgebung, seine Position und Orientierung übertragen muss, beeinträchtigt, was zu einer Verringerung der Fahrsicherheit führt. Auch können von der Steuereinrichtung des Navigationssystems erkannte Gefahrensituationen zwar auf der Anzeigeeinrichtung und ggf. akustisch ausgegeben werden; hierbei wird der das Fahrumfeld betrachtende Fahrer diese Informationen jedoch oftmals nicht schnell genug der realen Situation zuordnen können und daher ggf. nicht schnell genug in entsprechender Weise auf die Gefahrensituation reagieren können. Die plötzliche Ausgabe von Gefahren- und Warnsignalen kann sogar zu einer Verwirrung des Fahrers in schwierigen Fahrsituationen führen, die seine Aufmerksamkeit beeinträchtigen.

Weiterhin ist insbesondere bei unübersichtlichen Kreuzungsgeometrien die Vermittlung der Zielführungsanweisungen problematisch, da z. B. Abbiegemanöver für den Fahrer oftmals nur schwer in richtiger Weise von der Anzeigeeinrichtung auf die Straßensituation zu übertragen sind; daher nimmt derzeit ein Fahrer bei komplexen Kreuzungsgeometrien oftmals eine zu frühe oder zu späte Abbiegemöglichkeit wahr. Zwar können hierzu zusätzlich Entfemungsangaben oder Darstellungen der Entfernung mit abnehmenden Balken ausgegeben werden, jedoch sind auch derartige zusätzliche Angaben oftmals für den Fahrer nur schwer auf die reale Fahrsituation zu übertragen und können seine Aufmerksamkeit - insbesondere bei schwieriger Kurvenführung, Gegenverkehr und schwer erfassbaren weiteren Verkehrsteilnehmern wie Fahrrädern und Fußgängern - weiter beeinträchtigen.

Bei Anzeigeeinrichtungen mit dreidimensionaler Kartendarstellung werden z. B. der zurückzulegende Weg, Hinweisschilder oder das Ziel selbst hervorgehoben dargestellt. Hierbei kann ein in Fahrtrichtung gerichteter Beobachtungsstandpunkt des Fahrers in einer in der Regel wählbaren Höhe über dem Fahrzeug gewählt werden. Aufgrund insbesondere des technischen Aufwandes ist der dargestellte Inhalt jedoch oftmals sehr abstrakt und lückenhaft gehalten. Hierdurch und durch Abweichungen des frei wählbaren Betrachtungswinkels von der tatsächlichen Perspektive des Fahrers wird für den Fahrer die Herstellung eines Zusammenhangs mit der von ihm real wahrgenommenen Fahrsituation erschwert.

Weiterhin sind Verfahren und Systeme bekannt, bei denen dem Fahrer relevante Informationen direkt z. B. über Datenbrillen oder Head-Up-Displays in sein Sichtfeld eingeblendet werden. Hierdurch kann der Fahrer seinen Blick stets auf die Fahrbahn und die umgebende Fahrbahnsituation gerichtet halten und ergänzend Informationen aufnehmen. Die US 5,883,739 beschreibt ein Verfahren, bei dem Bilder des linken und rechten Blickfeldes gebildet und zu einem Stereo-Bild auf eine hinter der Windschutzscheibe angeordnete Sichtscheibe überlagert werden. Hierdurch können z. B. Pfeile als Zielführungsobjekte eingeblendet werden.

Aus Int. J. of Vehicle Design, Vol. 19, No. 2, 1998, A. Steinfeld and P. Green "Driver responses to navigation information on full-windshield, head-up displays" ist es bekannt, Navigationsinformationen entweder auf einer Anzeigeeinrichtung der Instrumententafel wiederzugeben oder der Straßenszene auf der Windschutzscheibe zu überlagern. Bei einer derartigen Überlagerung werden kürzere Reaktionszeiten des Fahrers erreicht als bei Ausgabe auf der zusätzlichen Anzeigeeinrichtung.

Die DE 198 52 662 A1 zeigt ein Verfahren zur multimediagestützten Navigation eines Fahrzeugs in einem Straßennetz, bei dem Fahranweisungen, die sich auf markante Objekte entlang der Fahrtroute beziehen, akustisch durch Sprachausgaben und durch eine optische Ausgabe an den Fahrer ausgegeben werden. Eine Recheneinrichtung zur Fahrtroutenbestimmung ermittelt eine Fahrtroute aus einer digitalen Karte und der von einem globalen Positionsbestimmungssystem ermittelten Position. Eine Recheneinrichtung zur Ausgabe von Fahranweisungen ermittelt markante Objekte, die mit den Fahranweisungen verknüpft werden. Die optische Ausgabe kann insbesondere durch Anwendung des Objektes auf einer Anzeigeeinrichtung erfolgen.

Aus der DE 100 23 160 A1 ist eine Kartenanzeigevorrichtung bekannt, bei der Gebäude und Straßen dreidimensional angezeigt werden. Eine Routenführungslinie wird auf einer Straße auf der dreidimensional angezeigten Karte dargestellt. Wenn die Routenführungslinie von einem Gebäude verborgen wird, zeigt eine Steuerungseinheit den überlappten Bereich der Routenführungslinie in einer Farbe an, die verschieden von der Farbe der Bereiche ist, die nicht überlappt werden. Insbesondere kann die Routenführungslinie dabei in halbtransparenter Weise angezeigt und beispielsweise einem in der Karte dargestellten Gebäude überlagert werden. Die Anzeigeeinheit hierzu ist insbesondere als eine Flüssigkristallanzeige ausgeführt.

Das erfindungsgemäße Verfahren und die erfindungsgemäße Vorrichtung bieten demgegenüber insbesondere den Vorteil, dass dem Fahrer Zielführungsanweisungen in realistischer Weise ohne allzu große kognitive Belastung und Ablenkung vom Verkehrsgeschehen übermittelt werden können. Hierbei werden die Fahranweisungen als Zielführungsobjekte und vorteilhafterweise zusätzliche Informationen als Informationsobjekte lagerichtig in einem realen bzw. realistischen Bild der Fahrzeugumgebung eingesetzt.

Die erfindungsgemäß ausgegebenen Zielführungsobjekte dienen als Zielführungsanweisungen können insbesondere Fahrtrichtungsangaben, z.B. sich über Abbiegungen, Kreuzungen oder ganze Kreisverkehrs- oder Kreuzungssysteme erstreckende Pfeile, sein. Zusätzliche Informationen können insbesondere zu Objekten der Umgebung, z. B. Hinweise auf Gebäude, ihre historische Bedeutung, Funktionen oder auf landschaftliche Gegebenheiten wie Flüsse, Berge, Seen, Landschaften, ausgegeben werden.

Der Fahrer kann erfindungsgemäß den Blick auf dem Verkehrsgeschehen halten und die Zielführungsanweisungen und ggf. weiteren Informationen aufgrund der lagerichtigen Zuordnung direkt den realen Positionen im Verkehrgeschehen zuordnen, ohne Abstraktionen der angezeigten Informationen durch z. B. Umsetzung einer Pfeilsymbolik auf reale Kreuzungssituationen vornehmen zu müssen. Somit ist er kognitiv geringer belastet und in seinen Entscheidungen sicherer.

Erfindungsgemäß können die eingeblendeten Zielführungsobjekte unter Berücksichtigung von weiterhin im Blickfeld des Fahrers sichtbaren Verdeckungsobjekten bzw. Verdeckungsbereichen gebildet werden. Hierbei werden die ersten Zielführungsausgangsobjekten beschnitten, indem Verdeckungsbereiche berücksichtigt werden, die aus Kartendaten oder erfindungsgemäß aus von einem Sensor des Fahrzeugs ermittelten Hindernissen berechnet werden. Aus den ersten Zielführungsausgangsobjekten werden hierbei diejenigen Teilbereiche herausgeschnitten, die im Sichtfeld des Fahrers hinter Verdeckungsbereichen bzw. Verdeckungsobjekten liegen. Somit wird eine realistische Darstellung erreicht, bei der die angezeigten Zielführungsobjekte - und ggf. auch weiteren Informationsobjekte - in die vom Fahrer sichtbare Fahrumgebung eingebettet werden und somit ohne weitere gedankliche Umsetzung vom Fahrer der Fahrumgebung zugeordnet werden können.

Die ggf. zu berücksichtigenden Verdeckungsobjekte können direkt aus den Kartendaten oder durch zusätzliche Sensoren des Fahrzeugs, z.B. Abstandssensoren auf Ultraschall-, Infrarot- oder Radarbasis, sowie auf der Auswertung von Stereobildern, insbesondere durch Photogrammetrie, ermittelt werden.

Erfindungsgemäß können die Zielführungsobjekte und ggf. weiteren Informationsobjekte vorteilhafterweise auf einer transparenten Sichtscheibe im Sichtfeld des Fahrers zwischen seiner Fahrumgebung und seiner Position, insbesondere auf der Windschutzscheibe selbst oder einer dahinter angeordneten Sichtscheibe, eingeblendet werden. Hierzu kann insbesondere eine Projektion auf die Windschutzscheibe oder eine dahinter angeordnete transparente Sichtscheibe erfolgen; weiterhin kann die Darstellung auch auf einer vom Fahrer selbst getragenen Sichtscheibe erfolgen, z. B. auf einer Datenbrille oder einem vorklappbaren Visier eines Helms.

Weiterhin ist es auch eine Darstellung der Zielführungsobjekte auf einer Anzeigeeinrichtung, z. B. im Dashboardbereich des Fahrzeuges, möglich. Hierbei wird die vom Fahrer real wahrgenommene Fahrumgebung bzw. Fahrszene durch z. B. eine an oder in dem Fahrzeug befestigte Kamera aufgenommen und als Kartendarstellung auf dem Anzeigefeld der Anzeigeeinrichtung zusammen mit den Zielführungsobjekten und ggf. Informationsobjekten wiedergegeben. Der Fahrer muss bei dieser erfindungsgemäßen Ausführungsform zwar kurz den Blick vom Sichtfeld der Straßensituation nehmen; da er in dem Anzeigefeld der Anzeigeeinrichtung jedoch direkt die auch von ihm gesehene Fahrumgebung realistisch wiederfindet, kann er die eingeblendeten Zielführungssignale und ggf. weiteren Objektinformationen direkt zuordnen.

Die Kartendaten können sowohl aus einem im Fahrzeug befindlichen Kartenspeicher, z. B. einem digitalen Datenträger wie einer CD-ROM, als auch über Datenfernübertragung erhalten werden. Die Positionsdaten können - in an sich bekannter Weise - von einem globalen Positionsbestimmungssystem, einem Wegstreckensensor oder einem Drehratensensor bzw. einer Kombination hiervon - ermittelt werden. Hierdurch werden die Position und Orientierung, d. h. Fahrtrichtung des Fahrzeugs, ermittelt und den Kartendaten in eindeutiger Weise zugeordnet. Die Zielführungsanweisungen werden in an sich bekannter Weise durch Navigationsalgorithmen aus vom Fahrer eingegebenen Zieldaten und den Positionsdaten des Fahrzeugs ermittelt.

Der Erfindung wird im Folgenden anhand der beiliegenden Zeichnungen an einigen Ausführungsformen näher erläutert. Es zeigen:
Fig. 1 ein Blockdiagramm einer Vorrichtung gemäß einer Ausführungsform mit einem Anzeigefeld im Sichtfeld des Fahrers;
Fig. 2 ein Blockdiagramm gemäß einer weiteren Ausführungsform bei Anzeige auf einem Anzeigefeld einer Anzeigeeinrichtung;
Fig. 3 ein Blockdiagramm gemäß einer weiteren Ausführungsform mit einer Berücksichtigung von Verdeckungen;

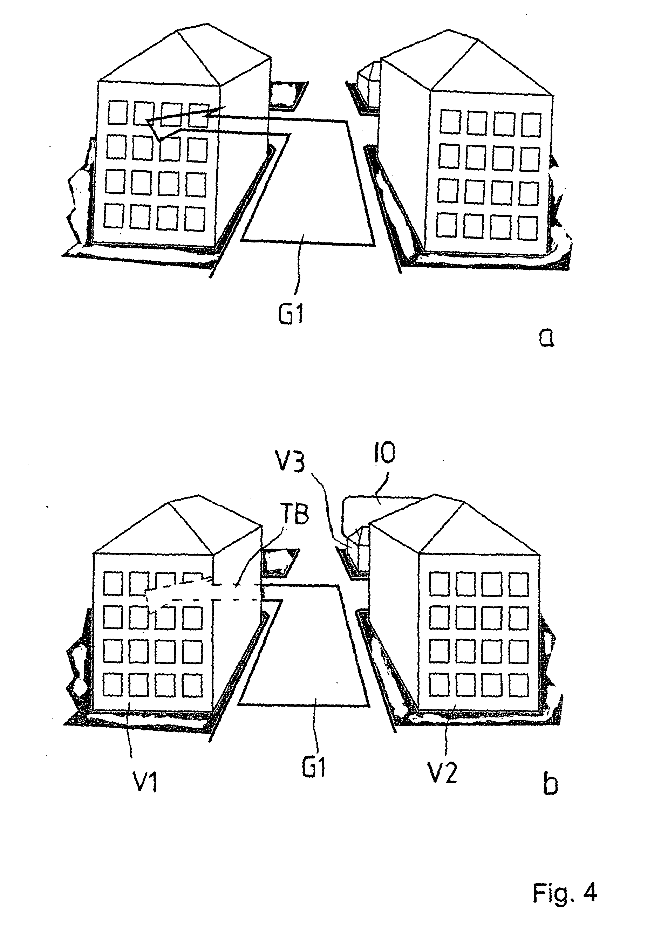

Fig. 4a,b von dem Fahrer in den Anzeigen sichtbare Darstellungen bei a) den Ausführungsformen der Fig. 1, 2 und b) der Fig.3 .

Eine Vorrichtung 1 zur Darstellung von Fahrerinformationen für ein Fahrzeug F weist einen Kartenspeicher 2 auf, z. B. ein digitales Speichermedium in dem Kraftfahrzeug F oder eine extern vorgesehene, über Datenfernübertragung mit dem Kraftfahrzeug F in Verbindung stehende Kartendatenbank. Aus dem Kartenspeicher 2 werden Kartensignale K an eine Navigationseinrichtung 3 ausgegeben. Die Navigationseinrichtung 3 nimmt weiterhin von einem Positionssensor 4 eines Globalen Positionsbestimmungssystems (GPS) Positionssignale P und von einer Eingabeeinrichtung 5 Zieldaten Z, z. B. vom Fahrer eingegebene Zielkoordinaten oder Namensangaben eines Zielortes, auf. Die Navigationseinrichtung 3 berechnet in an sich bekannter Weise Zielführungsanweisungen und gibt entsprechende Zielführungssignale ZF, die ein Orientierungssignal zur Fahrtrichtungszuordnung umfassen, an eine Ermittlungseinrichtung 6 aus. Die Ermittlungseinrichtung 6 nimmt weiterhin Positionsdaten P des Positionssensors 4 und Kartendaten K des Kartenspeichers 2 auf und ermittelt hieraus erste Zielführungsobjekte G1, die einer Darstellung in einer Karte der Fahrumgebung entsprechen.

Weiterhin können von der Navigationseinrichtung 3 relevante Objekte, z. B. Gebäude, Landschaften, Sehenswürdigkeiten, im Blickfeld des Fahrers auf der Grundlage von Kartendaten K und Positionssignalen P ermittelt und Informationssignale I mit Informationen über diese Objekte, z. B. ihre Namen und Funktionen, an die Ermittlungseinrichtung 6 ausgegeben werden. Die Ermittlungseinrichtung 6 ermittelt Informationsobjekte IO, z. B. Tafeln mit Angaben über die Objekte.

Eine Berechnungseinrichtung 7 nimmt die ersten Zielführungsobjekte G1, Kartendaten K und Positionsdaten P auf und ermittelt Zielführungsanzeigeobjekte ZO, die Angaben über Form, Größe und Koordinaten in einem Anzeigefeld 10 enthalten. Die Zielführungsanzeigeobjekte ZO können insbesondere als Projektionsabbildungen der Zielführungsobjekte G1 aus Sicht des Fahrers gebildet werden. Weiterhin werden die Informationsobjekte IO an die Berechnungseinrichtung 7 weitergegeben, die die Koordinaten der Informationsobjekte IO im Anzeigefeld 10 berechnet; hierbei können die Informationsobjekte IO verändert werden.

Die Berechnungseinrichtung 7 gibt die Zielführungsanzeigeobjekte ZO und die Informationsobjekte IO einschließlich ihrer Koordinaten an eine Projektionseinrichtung 8 weiter, die sie bei dieser Ausführungsform wiederum als Lichtsignale auf ein Anzeigefeld 10 einer transparenten Sichtscheibe 9 wirft. Die Sichtscheibe 9 ist hierbei zwischen dem Fahrer und der von ihm beobachteten Fahrzeugumgebung, d.h. im Blickfeld des Fahrers, angeordnet; sie kann z. B. die Windschutzscheibe selbst oder eine hinter der Windschutzscheibe angeordnete transparente Sichtscheibe 9 sein. Der Fahrer nimmt somit das Zielführungsanzeigeobjekt ZO - in der gezeigten Ausführungsform einen eine Linksabbiegung anzeigenden Pfeil ZO - lagerichtig in der von ihm durch das ansonsten transparente Anzeigefeld 10 gesehenen Fahrzeugumgebung wahr. Die Navigationseinrichtung 3, Ermittlungseinrichtung 6 und Berechnungseinrichtung 7 können integriert als eine Steuereinrichtung 11 ausgebildet sein.

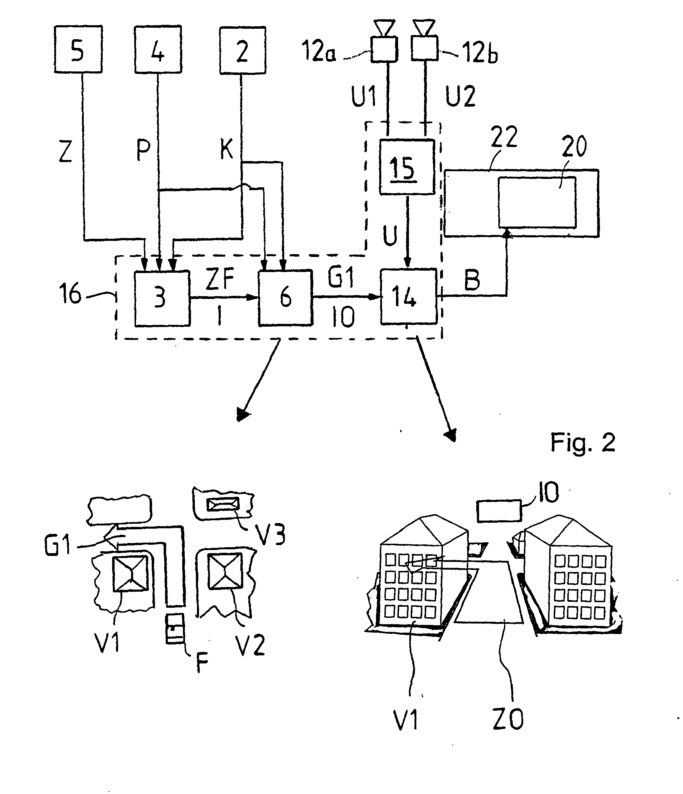

Bei der Ausführungsform der Fig. 2 erfolgt eine Darstellung auf einer separaten Anzeigeeinrichtung 22. Hierzu werden die ersten Zielführungsobjekte G1 und Informationsobjekte IO wie bei der ersten Ausführungsform ermittelt und an eine bilderzeugende Einrichtung 14 ausgegeben. Eine Monokamera oder zwei Kameras 12a, 12b, die z. B. innerhalb des Fahrzeugs F unterhalb des Dachhimmels angeordnet sind, nehmen die Fahrumgebung in Blickrichtung des Fahrers auf und geben Umgebungsbildsignale U1, U2 an eine Auswerteeinrichtung 15, die erste Bildsignale U an die bilderzeugende Einrichtung 14 ausgibt. Die bilderzeugende Einrichtung 14 ermittelt wiederum Zielführungsanzeigeobjekte ZO und überlagert diese und die Informationsobjekte IO den ersten Bildsignalen U und gibt zweite Bildsignale B an ein Anzeigefeld 20 der Anzeigeeinrichtung 22 aus. Auch bei dieser Ausführungsform kann der Fahrer somit die ihm aktuell vertraute Fahrszene in einem realen bzw. realitätsangepassten Bild wiedererkennen und hierbei Zielführungsanzeigeobjekte ZO und Informationsobjekte IO direkt dem Straßenverkehr zuordnen, wozu er allerdings seinen Blick von der Fahrumgebung zu der Anzeigeeinrichtung 22 wenden muss. Bei der zweiten Ausführungsform der Fig. 2 können die Navigationseinrichtung 3, Ermittlungseinrichtung 6, Auswerteeinrichtung 15 und bilderzeugende Einrichtung 14 integriert als eine Steuereinrichtung 16 mit entsprechender Programmierung ausgebildet sein.

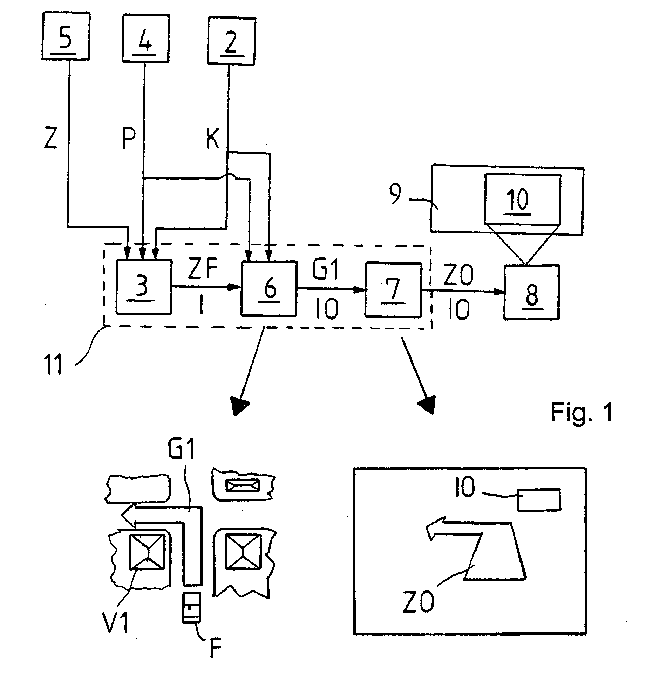

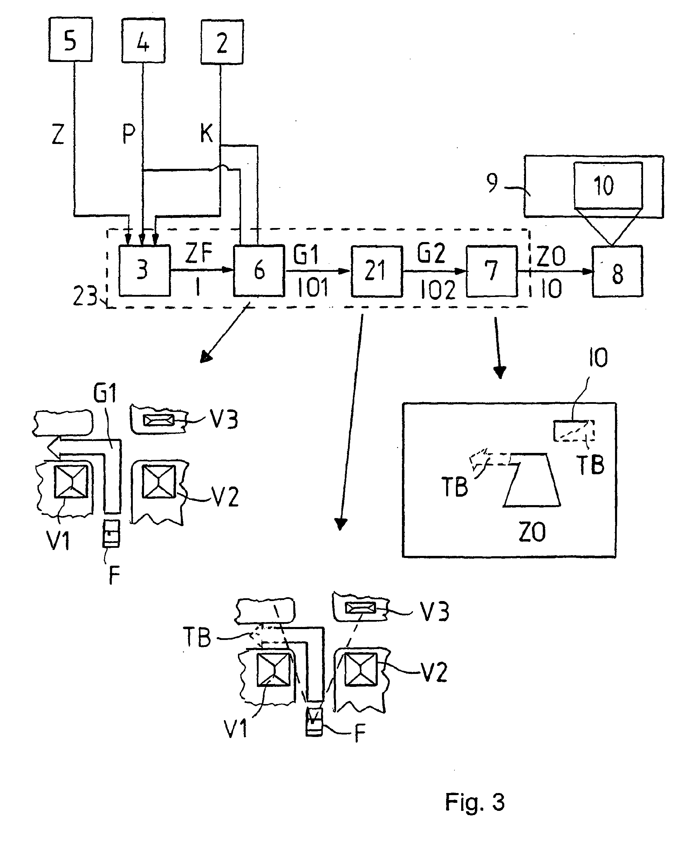

Bei der Ausführungsform der Fig. 3 werden gegenüber den ersten beiden Ausführungsformen der Fig. 1, 2 die Zielführungsanzeigeobjekte ZO und Informationsobjekte IO entsprechend beschnitten ausgegeben, um ihre Wahrnehmung in realer Weise an teilweisen Verdeckungen durch Verdeckungsobjekte im dem vom Fahrer sichtbaren Fahrumfeld/Blickfeld anzupassen. Der Vorgang des Beschneidens, d.h. Entfernens von Teilbereichen, kann entweder wie in Figur 3 gezeigt in der Karte, d.h. bei den Objekten G1, IO der Kartendarstellung, oder auch in den auf dem Anzeigefeld 10, 20 darzustellenden Zielführungsanzeigeobjekten ZO und Informationsobjekten IO erfolgen.

Die ersten Zielführungsobjekte G1 und Informationsobjekte IO1 werden von der Ermittlungseinrichtung 6 zunächst an eine Beschneidungseinrichtung 21 ausgegeben. Die Beschneidungseinrichtung 21 ermittelt Teilbereiche TB der Zielführungsobjekte G1 und Informationsobjekte IO1, die in Blickrichtung - gerader Linie - hinter einem Verdeckungsobjekt liegen, d.h. zwischen denen und der Position des Fahrers mindestens ein Verdeckungsobjekte V1, V2 liegt. Da ein Teilbereich TB aufgrund der vorderen Position des Verdeckungsobjektes V1 verdeckt wird, wird er entfernt oder als verdeckter Bereich anders, z. B. mit anderer Farbe, Helligkeit, Schattierung oder gestrichelten Umrisslinien, dargestellt. Hierdurch werden zweite Zielführungsobjekte G2 und zweite Informationsobjekte IO2 ermittelt, nachfolgend wiederum der Berechnungseinrichtung 7 bzw. der bilderzeugenden Einrichtung 14 eingegeben und wie bei den obigen Ausführungsformen der Figuren 1 oder 2 Zielführungsanzeigeobjekte ZO und Informationsobjekte IO auf einem Anzeigefeld 10 bzw. 20 dargestellt.

Alternativ zu der gezeigten Ausführungsform kann die Beschneidungseinrichtung 21 grundsätzlich auch hinter der Projektionseinrichtung 7 angeordnet sein und somit Verdeckungen direkt auf dem anzuzeigenden Bild als Überlappungen der zweidimensionaler Flächenbereiche erkennen und entfernen. Die Navigationseinrichtung 3, Ermittlungseinrichtung 6, Beschneidungseinrichtung 15 und Berechnungseinrichtung 7 können integriert als eine Steuereinrichtung 23 mit entsprechender Programmierung ausgebildet sein.

Bei sämtlichen Ausführungsformen können ergänzend akustische Signale ausgegeben werden. Insbesondere bei der Fig. 2 können hierbei bei Ausgabe von Zielführungsanzeigeobjekten ZO und/oder Informationsobjekten IO oder auch bei Änderung dieser Objekte ZO, IO akustische Signale ausgegeben werden, damit der Fahrer kurz den Blick auf das Anzeigefeld 20 richtet.

## Patentansprüche

1. Verfahren zur Darstellung von Fahrerinformationen, mit mindestens folgenden Schritten: Erstellen von Zielführungssignalen (ZF) aus eingegebenen Zieldatensignalen (Z), Positionssignalen (P) und Kartensignalen (K), Ermitteln mindestens eines ersten Zielführungsobjekts (G1) aus den Zielführungssignalen (ZF), Kartensignalen (K) und Positionssignalen (P), Ermitteln eines Zielführungs-Anzeigeobjekts (ZO) zur lagerichtigen Darstellung in einem Anzeigefeld (10, 20), wobei das Zielführungs-Anzeigeobjekt (ZO) aus dem ersten Zielführungsobjekt (G1) ermittelt wird und Angaben über seine Position in dem Anzeigefeld (10, 20) enthält, und Ausgabe des mindestens einen Zielführungs-Anzeigeobjekts (ZO) auf dem Anzeigefeld (10, 20), wobei das Zielführungs-Anzeigeobjekt (ZO) erzeugt wird, indem mindestens ein Teilbereich (TB) des ersten Zielführungsobjekts (G1) oder eines aus dem ersten Zielführungsobjekt (G1) erzeugten Zielführungs-Anzeigeobjektes in Abhängigkeit von den Kartensignalen (K) und Positionssignalen (P) entfernt wird, wobei ein Teilbereich (TB) des Zielführungsobjekts (G1) entfernt wird, wenn auf Grundlage der Positionssignale (P) und Kartensignale (K) ermittelt wird, dass zwischen der Fahrzeugposition und einer geografischen Position des Teilbereichs (TB) ein Verdeckungsobjekt (V1, V2, V3) angeordnet ist, **dadurch gekennzeichnet, dass** als Verdeckungsobjekte andere bewegliche Objekte, z. B. Fahrzeuge, erkannt werden, welche von mindestens einem Sensor des Fahrzeuges, z. B. einem Radar-, Stereobild-, Monobild-, Infrarot-, Ultraschallsensor, erfasst werden.

2. Verfahren nach Anspruch 1, **dadurch gekennzeichnet, dass** aus den Kartensignalen (K) und Positionssignalen (P) mindestens ein Informationsobjekt (IO) ermittelt und auf dem Anzeigefeld (10, 20) ausgegeben werden.

3. Verfahren nach Anspruch 2, **dadurch gekennzeichnet, dass** das Informationsobjekt (IO) ermittelt wird, indem aus den Kartensignalen (K) und Positionssignalen (P) Informationssignale (I) erzeugt werden, aus denen mindestens ein erstes Informationsobjekt (IO1) erzeugt wird, von dem ein Teilbereich (TB) entfernt wird, wenn auf Grundlage der Positionssignale (P) und Kartensignale (K) ermittelt wird, dass zwischen der Fahrzeugposition und einer geografischen Position des Teilbereichs (TB) ein Verdeckungsobjekt (V1, V2, V3) angeordnet ist.

4. Verfahren nach einem der vorherigen Ansprüche, **dadurch gekennzeichnet, dass** die Positionssignale (P) von mindestens einem Sensor (4), z. B. einem Sensor (4) eines Globalen Positionsbestimmungssystems (GPS) und/oder einem Wegstreckenzähler und/oder einem Drehratensensor, ausgegeben werden.

5. Verfahren nach einem der vorherigen Ansprüche, **dadurch gekennzeichnet, dass** das Anzeigefeld (10) eine transparente Fläche im Sichtbereich zwischen dem Fahrer und einem Fahrbereich seines Fahrzeugs ist.

6. Verfahren nach Anspruch 5, **dadurch gekennzeichnet, dass** das Anzeigefeld (10) ein Teil der Windschutzscheibe des Fahrzeugs, eine transparente Sichtscheibe (9) hinter der Windschutzscheibe des Fahrzeugs oder Teil einer vom Fahrer getragenen Visiereinrichtung, z. B. einer Brille oder eines von einem Helm vorklappbaren Visiers, ist.

7. Verfahren nach einem der Ansprüche 1-4, **dadurch gekennzeichnet, dass** das Anzeigefeld (20) auf einer Anzeigeeinrichtung (22), z. B. im Dashboardbereich des Fahrzeugs, vorgesehen ist, wobei auf dem Anzeigefeld (20) Bildsignale (B) ausgegeben werden, die Zielführungsobjekten (ZO) und von einer Kameraeinrichtung (12a, 12b) des Fahrzeugs ausgegebene Umgebungsbildsignale (U) umfassen.

8. Vorrichtung zur Darstellung von Fahrerinformationen, mit einer Navigationseinrichtung (3), einer Einrichtung (6) zum Ermitteln eines ersten Zielführungsobjektes (G1), einer Einrichtung (7,14) zum Berechnen eines Zielführungs-Anzeigeobjektes (ZO) und einer Einrichtung (8,9,10;20,22)zur Darstellung des Zielführungs-Anzeigeobjektes (ZO), wobei eine Beschneidungseinrichtung (21) vorgesehen ist, die aus ersten Zielführungsobjekten (ZO) und/oder Informationsobjekten (IO1) mindestens einen Teilbereich (TB) entfernt, wenn zwischen dem Teilbereich (TB) und der Position des Fahrers ein Verdeckungsobjekt (V1,V2) ermittelt wird, **gekennzeichnet durch** mindestens einen Sensor des Fahrzeuges zur Erfassung anderer beweglicher Objekte als Verdeckungsobjekte.

## Claims

1. Method for displaying information for a driver, having at least the following steps: the production of routing signals (ZF) from input destination data signals (Z), position signals (P) and map signals (K), determination of at least a first routing object (G1) from the routing signals (ZF), map signals (K) and position signals (P), determination of a routing display object (ZO) for positionally correct display in a display field (10, 20), wherein the routing display object (ZO) is determined from the first routing object (G1) and contains information about its position in the display field (10, 20), and outputting of the at least one routing display object (ZO) on the display field (10, 20), wherein the routing display object (ZO) is generated by at least one part (TB) of the first routing object (G1) or one routing display object which is generated on the basis of the first routing object (G1) is removed as a function of the map signals (K) and position signals (P), wherein a part (TB) of the routing object (G1) is removed if it is determined on the basis of the position signals (P) and map signals (K) that a concealing object (V1, V2, V3) is arranged between the position of the vehicle and a geographic position of the part (TB), **characterized in that** other movable objects, for example vehicles, which are sensed by at least one sensor of the vehicle, for example a radar sensor, stereo image sensor, mono image sensor, infrared sensor, ultrasonic sensor, are detected as concealing objects.

2. Method according to Claim 1, **characterized in that** at least one information object (IO) is determined from the map signals (K) and position signals (P) and output on the display field (10, 20).

3. Method according to Claim 2, **characterized in that** the information object (IO) is determined by generating information signals (I) from the map signals (K) and position signals (P), from which information signals (I) at least one first information object (IO1) is generated, from which a part (TB) is removed if it is determined on the basis of the position signals (P) and map signals (K) that a concealing object (V1, V2, V3) is arranged between the position of the vehicle and a geographic position of the part (T).

4. Method according to one of the preceding claims, **characterized in that** the position signals (P) are output by at least one sensor (4), for example a sensor (4) of a global position-determining system (GPS) and/or an odometer and/or a rotational speed sensor.

5. Method according to one of the preceding claims, **characterized in that** the display field (10) is a transparent area in the field of vision between the driver and a driving area of his vehicle.

6. Method according to Claim 5, **characterized in that** the display field (10) is part of the windscreen of the vehicle, a transparent panel (9) behind the windscreen of the vehicle or part of an aiming device which is worn by the driver, for example a pair of glasses or an aiming device which can be folded down from a helmet.

7. Method according to one of Claims 1-4, **characterized in that** the display field (20) is provided on a display device (22), for example in the dashboard area of the vehicle, wherein image signals (B), which comprise routing objects (ZO) and surroundings image signals (U) which are output by a camera device (12a, 12b) of the vehicle, are output on the display field (20).

8. Device for displaying information for a driver, having a navigation device (3), a device (6) for determining a first routing object (G1), a device (7, 14) for calculating a routing display object (ZO) and a device (8,9,10;20,22) for displaying the routing display object (ZO), wherein a cutting device (21) is provided which removes at least one part (TB) from first routing objects (ZO) and/or information objects (101) if a concealing object (V1, V2) is detected between the part (TB) and the driver's position, **characterized by** at least one sensor of the vehicle for sensing other movable objects as concealing objects.

## Revendications

1. Procédé d'établissement d'informations pour le conducteur comportant au moins les étapes suivantes :
- établissement de signaux de guidage vers la destination (ZF) à partir des signaux de données de destinations entrés (Z), des signaux de position (P) et des signaux de carte (K), détermination d'au moins un premier objet de guidage de destination (G1) à partir des signaux de guidage de destination (ZF), des signaux de carte (K) et des signaux de position (P), détermination d'un objet d'affichage de guidage de destination (ZO) pour une représentation en position correcte dans le champ d'affichage (10, 20),
l'objet d'affichage de guidage de destination (ZO) se déterminant à partir du premier objet de guidage de destination (G1) et comportant les indications sur sa position dans le champ d'affichage (10, 20) et émission d'au moins un objet d'affichage de guidage de destination (ZO) sur le champ d'affichage (10, 20), l'objet d'affichage de guidage de destination (ZO) étant formé en ce qu'on enlève au moins une zone partielle (TB) du premier objet de guidage de destination (G1) ou d'un objet d'affichage de guidage de destination généré à partir du premier objet de guidage de destination (G1) en fonction des signaux de carte (K) et des signaux de position (P),
- on enlève une zone partielle (TB) de l'objet de guidage de destination (G1) si, sur le fondement des signaux de position (P) et des signaux de carte (K) on détermine qu'entre la position du véhicule et une position géographique de la zone partielle (TB) il y a un objet d'obstruction (V1, V2, V3),
**caractérisé en ce que**
on considère, comme objet d'obstruction les autres objets mobiles, par exemple les véhicules qui sont saisis par au moins un capteur du véhicule, par exemple un capteur radar, un capteur stéréoscopique, un capteur monoscopique, un capteur à infrarouge ou un capteur à ultrasons.

2. Procédé selon la revendication 1,
**caractérisé en ce qu'**
à partir des signaux de carte (K) et des signaux de position (P) on détermine au moins un objet d'information (IO) et on le présente dans le champ d'affichage (10, 20).

3. Procédé selon la revendication 2,
**caractérisé en ce qu'**
on détermine l'objet d'information (IO) en générant des signaux d'information (I) à partir des signaux de carte (K) et des signaux de position (P), signaux d'information à partir desquels on génère au moins un premier objet d'information (IO1) dont on élimine une zone partielle (TB) si sur le fondement des signaux de position (P) et des signaux de carte (K) on détermine qu'entre la position du véhicule et une position géographique de la zone partielle (TB) se trouve un objet d'obstruction (V1, V2, V3).

4. Procédé selon l'une des revendications précédentes,
**caractérisé en ce qu'**
on émet les signaux de position (P) à partir d'au moins un capteur (4), par exemple un capteur (4) d'un système de positionnement global (GPS) et/ou d'un compteur de trajet et/ou d'un capteur de vitesse de rotation.

5. Procédé selon l'une des revendications précédentes,
**caractérisé en ce que**
le champ d'affichage (10) est une surface transparente dans la plage de visibilité entre le conducteur et la plage de conduite de son véhicule.

6. Procédé selon la revendication 5,
**caractérisé en ce que**
le champ d'affichage (10) est une partie du pare-brise du véhicule, une vitre transparente (9) derrière le pare-brise du véhicule ou une partie de l'installation de visée portée par le conducteur, par exemple des lunettes ou une visière rabattue devant son casque.

7. Procédé selon l'une des revendications 1 à 4,
**caractérisé en ce que**
le champ d'affichage (20) est prévu sur une installation d'affichage (22), par exemple la plage du tableau de bord du véhicule et les signaux d'image (B) sont fournis au champ d'affichage (20), ces signaux comprenant les objets de guidage vers la destination (ZO et les signaux d'environnement (U) émis par une installation à caméra (12a, 12b) du véhicule.

8. Dispositif de représentation d'informations pour le conducteur à l'aide d'une installation de navigation (3), d'une installation (6) pour déterminer un premier objet de conduite vers la destination (G1), une installation (7, 14) pour calculer un objet d'affichage de guidage vers la destination (ZO) et une installation (8, 9, 10 ; 20, 22) pour représenter l'objet d'affichage pour la conduite vers la destination (ZO), une installation de décision (21) étant prévue pour éliminer deux premiers objets de guidage vers la destination (ZO) et/ou des objets d'information (IO1) d'au moins une plage partielle (TB), si entre la zone partielle (TB) et la position du conducteur on détecte un objet d'obstruction (V1, V2),
**caractérisé en ce qu'**
au moins un capteur du véhicule saisit d'autres objets mobiles que les objets d'obstruction.
